# EUROPEAN PATENT APPLICATION

(11) **EP 2 148 453 A1**
(43) Date of publication of application: **27.01.2010**
(21) Application number: 08104819.1
(22) Date of filing: 22.07.2008
(51) Int. Cl.: H04B 10/00, H04J 3/14, H04J 3/16

(54) **Redundancy method in PON systems**

(71) Applicant: Nokia Siemens Networks Oy, 02610 Espoo (FI)
(72) Inventor: Rehberg, Reinhard, 17495, Sanz (DE)
(74) Representative: Bruglachner, Thomas E.

(57) **Abstract**

The invention describes a new redundancy method in passive optical networks, wherein each optical network terminal is connected via splitters and the optical distribution network with two optical line terminals, wherein one of them is in an active mode, while the other one is in an standby mode. The active optical line terminal is periodically deactivated, forcing the standby optical line terminal to measure the actual time delays of the optical distribution network and calculating equalization times which are stored in the optical network terminals. Thus, if a real failure occurs in the active optical line terminal or its connection to the splitter, the other optical line terminal is able to take over the operation within a very short time with the stored equalization times without need to measure and reconfigure the optical network again.

## Description

This invention relates to a method for a better redundancy behaviour in passive optical networks (PON) comprising optical line terminals (OLT), optical network terminals (ONTs) and optical distribution networks (ODN) with optical lines (OL) and splitters (SP) between them.

An ODN is an optical fibre cabling network in which the central part contains no active electronic devices. It is accessed by users and all of the user signals going upstream and downstream use only passive components such as optical dividers or splitters. The PON technology is a broadband access technology that has great competitive advantages and is an important technical means that offers user access over the last mile. By using passive optical components in its ODN and optical fibres as the medium for transmission, the technology has the advantage of high bandwidth, high immunity to electromagnetic interference, low loss, low cost, and simple design. In the last years, various PON technologies have become available.

A PON is terminated by ONTs which are integrated electronic units that present standard interfaces to the user. An optical network unit ONU is the PON-side part of the ONT and may present one or more converged interfaces, such as xDSL or Ethernet, toward the user. An ONU typically requires a separate subscriber unit to provide native user services such as telephony, Ethernet data, or video.

The interface between the PON and the backbone network is provided by OLTs. An OLT typically includes the Internet Protocol (IP) traffic over Gigabit, 10G, or 100 Mbit/s Ethernet, standard time division multiplexed interfaces such as SONET/SDH or PDH at various rates, or an ATM User-Network-Interface at 155-622 Mbit/s.

For a better understanding of the state of the art relating to redundancy, the following figures are used:
- Fig. 1: shows the usual tree topology of PONs.
- Fig. 2: shows a completely doubled PON.
- Fig. 3: shows a topology wherein each ONT has two uplink ports for redundancy.
- Fig. 4: shows a topology wherein each ONT has a connection to a neighboured ONT.
- Fig. 5: shows a topology wherein a group of ONTs shares two redundant OLTs wherein one is active and the other one is in standby mode during normal operation.

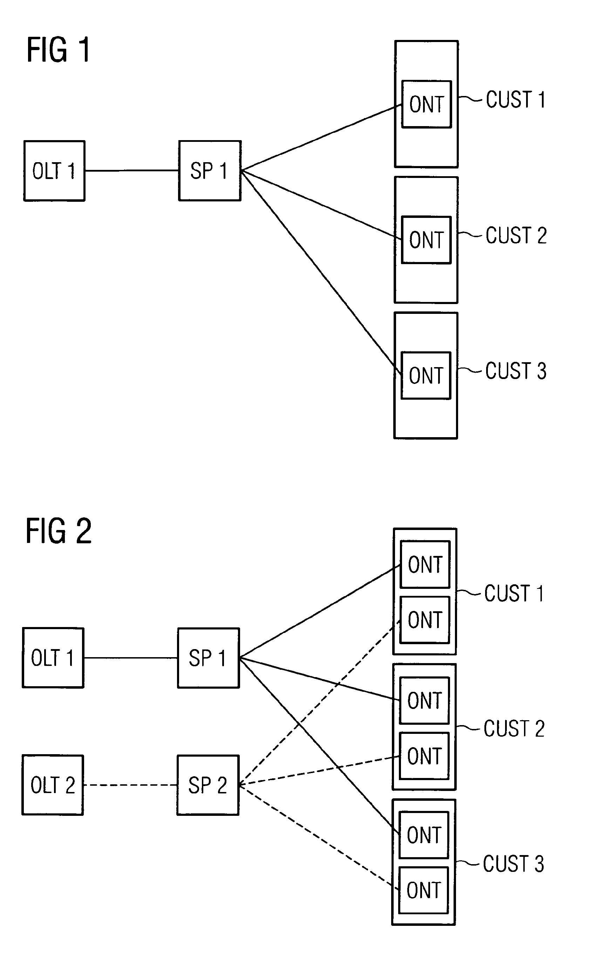

Due to the standard topology shown in Fig. 1, the transmission modes for downstream from OLT to ONT and upstream from ONT to OLT are different. In the downstream direction, the OLT broadcasts the optical signal to all connected ONTs in continuous mode, that means that the downstream channel always has an optical data signal. Each ONT only reads the content of those packets that are addressed to it.

In contrary, in the upstream channel, ONTs can not transmit optical data signals in continuous mode. The Use of continuous mode would result in in a disturbance of all of the signals transmitted from the different ONTs which are combined into one optical fibre by the splitter which serves as a power coupler. Therefore, burst mode transmission is adopted for upstream channel. Each ONT only transmits optical data packets when the OLT has allocated a time slot for it and the OLT needs to transmit, so all the ONTs share the upstream channel in the time division multiplexing mode.

The phases of the burst mode optical data packets received by the OLT are different from packet to packet, since the ONTs are not synchronized to transmit optical data packets in the same phase, and the distances between one OLT and each ONT are varying. Therefore the optical data packets of the ONTs, received by the OLT, may have different amplitudes and phases, and also the transmission delay from each ONT to the OLT is not unique. To compensate the different transmission delays, the OLT measures the round-trip transmission delay, calculates equalization times out of the delays and sets a register in each ONT via a message of the Physical Layer Operations And Maintenance (PLOAM) to equalize the delay with respect to all of the other ONTs of the PON.

When the equalization times of all ONTs have been set, the OLT transmits grants to the individual ONTs, wherein a grant is a permission to use a defined interval of time for the upstream transmission. The grant map is recalculated dynamically every few milliseconds. The OLT allocates bandwidth to all ONTs, such that each ONT receives timely bandwidth for its transmit needs.

To protect the PON system in case of a failures of the network with as few limitations in a failure case as possible, different methods are known. The simplest way is to double all components of the system (Fig. 2). This topology is very reliable, but also the most expensive one.

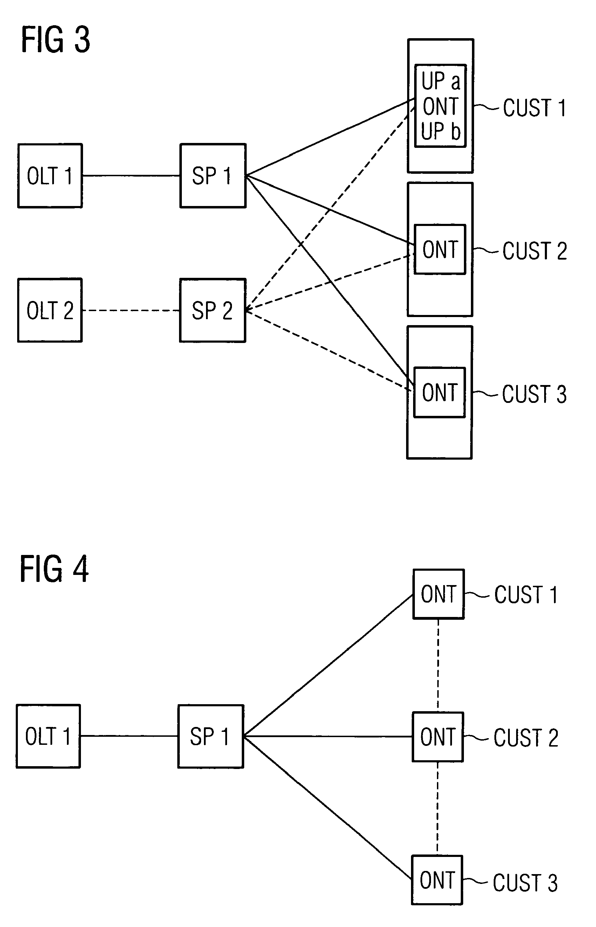

Also known is a topology wherein each customer uses an ONT with two uplink ports (Fig. 3). Each of the two ports has a connection to a separate splitter, and each splitter connects to an own OLT. One of the uplink ports (UP a) with its splitter and OLT is normally active, while the other one (UP b) is in standby mode. In case of a network failure, the standby uplink port with its splitter and OLT will become active and transmit its signal to the higher network hierarchy. This topology is also expensive, since each of the ONTs has to have a part of its components doubled.

Another redundancy solution is described in the patent EP 1 835 641 (Fig. 4), wherein each ONT has a connection to its neighboured ONT of the same ONT group. In case of a failure of the connection of an ONT to its splitter, one of the neighboured ONT can route the communication to the common splitter. This solution requires special more expensive ONTs and only protects a part of the network.

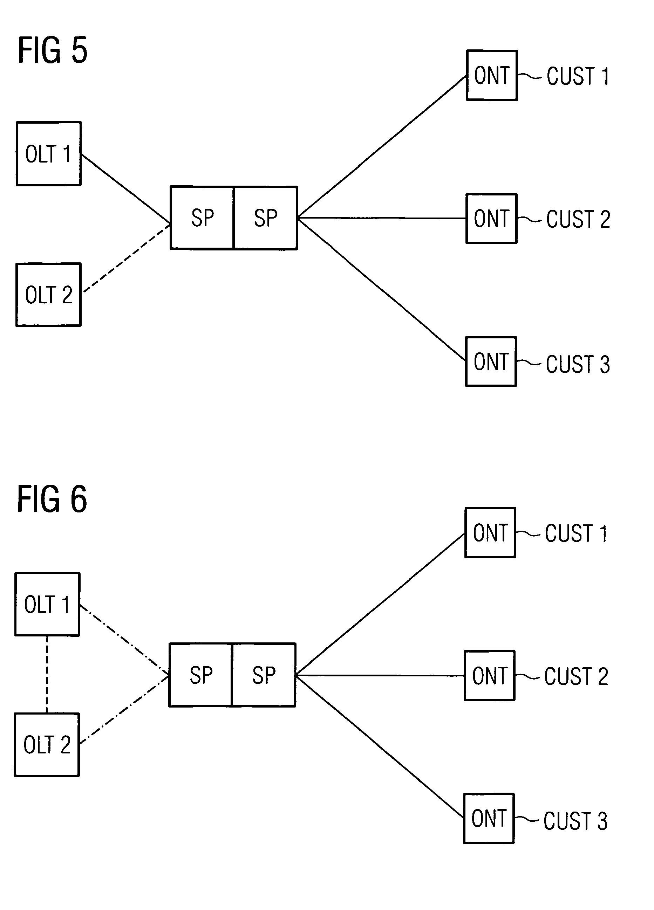

A further known solution (Fig. 5) protects the more important part of the network which is used by multiple customers. In this solution each group of ONTs has a connection over two connected splitters to two OLTs. One of the OLTs is normally active, while the other one is normally in standby mode. The active OLT transmit its optical data to the ONTs (downstream) and receives the answers (upstream). The standby OLT is not allowed to transmit to prevent it from disturbing the active OLT. Nevertheless, the standby OLT receives also the upstream data which is meant for the active OLT. This solution has two disadvantages:
- since the standby OLT normally does not transmit, it remains unclear if the transmit way is in function or it has suffered a defect in the meantime,
- it is not possible to synchronize both OLTs, so that the standby OLT can not seamlessly take over the operation of the active OLT if a failure has occurred. For a synchronization, the standby OLT would have to measure the delay time of its optical path, which is not possible since the standby OLT is not allowed to transmit data. Therefore, if a failure occurs in the described solution, the beforehand standby and now active OLT has to start again, configuring the network by measuring all delay times, calculating and storing equalization times and thus generating a long pause up to the normal operating of the connected ONT group.

The objective of this invention is to protect important parts of a PON from failures of the network without generating long interruptions and without increasing the expenditure for the components.

This objective can be achieved by a PON redundancy method with the features of claim 1 in conjunction with a PON system with the features of claim 5.

The new solution and their advantages will be explained by help of Fig. 6. Starting point of the new solution is a topology like in Fig. 5. The difference is that the two OLTs change their active respectively standby mode periodically, which is indicated in Fig. 6 by another kind of dotted lines between the splitter and the connected OLTs than in Fig. 5.

The active OLT (OLT 1) is periodically deactivated for a short time. At the same time, the passive OLT (OLT 2) is activated and its transmitter measures the line-parameters, including the round-trip-delay times, of the optical lines between OLT 2 and the ONTs of the group. It then calculates timing parameters, including equalization times, for each ONT and stores these values in the ONTs. When the measurement and calculation is completed, OLT 2 is deactivated again, while OLT 1 is activated and continues its operation.

This periodic measurement of round-trip-delay times to the standby OLT is repeated in intervals which are short enough to register a possible change in the physical configuration of the ODN.

When the active OLT 1 or the optical line to its splitter has a defect, the OLT 2 which was passive up to that moment is activated and can immediately use the beforehand calculated equalization times without need to start the measurement of the round-trip-delay times and calculation of equalization times from the beginning. In this way, the time between a failure and the operation of the standby OLT is significantly reduced compared to the solution in Fig. 5.

In a further embodiment of the invention, deactivation and activation of the optical line terminal is achieved by the following steps:
- a message of the PLOAM layer of the active OLT 1 is sent to the ONTs that a switch over to a new measurement should take place,
- then the ONTs react by a new state, e.g. Wait for Standby_Active, and an acknowledgement message which deactivates OLT 1 and activates OLT 2 for a short moment,
- the activated OLT 2 sends a new Standby_Ranging_Time Bandwith_Map requirement message, wherein the answer to that message is used to measure the round-trip-delay times of the optical lines between OLT 2 and the ONTs and to calculate the equalization times,
- after a predefined time, the transmitter of OLT 2 is deactivated and the transmitter of OLT 1 is activated again, so that the normal operation can be continued.

In a further embodiment of the invention, the standby OLT 2 transmits its calculated equalization times to OLT 1 via a link between the OLT 2 and OLT 1 (Fig. 6). OLT 1 then stores these values as standby values into an additional registers of each ONT. In a failure case, the standby OLT 2 can then use these standby values of the ONTs immediately without sending them before to the ONTs and thus reducing the switch over time again.

### References

- CUST: Customer
- ODN: Optical Distribution Network
- OL: Optical Line
- OLT: Optical Line Terminal
- OLT 1: normally active OLT
- OLT 2: standby OLT
- ONT: Optical Network Terminal
- ONU: Optical Network Unit
- PLOAM: Physical Layer Operations and Maintenance
- PON: Passive Optical Network
- SP: Splitter
- UP: Uplink Port

## Claims

1. A method for the switch over between redundant optical lines (OL) linking a first and a second optical line terminal (OLT) with splitters (SP), which connect to several optical network terminals (ONT) for the transmission of user data in a passive optical network (PON)
comprising the steps
- setting the first OLT in an activated state and the second OLT in a standby state
- handling the transmission of user data in the first OLT
- deactivating the first OLT and activating the second OLT
- executing a line-parameter-measurement in the second OLT for the connections to the ONTs
- storing timing parameters for the connections calculated from the measurements
- deactivating the second OLT and reactivating the first OLT
- repeating these steps periodically
and in case of a failure of the first OLT or the optical line (OL) of the first OLT to a splitter
- activating the second OLT
- activate the optical network terminals (ONT) with the calculated timing parameters for the second OLT
- handling the transmission of user data in the second OLT.

2. A redundancy method according to claim 1, wherein the line-parameters include round-trip-delay times and the timing parameters of the connections include equalization dalay times.

3. A redundancy method according to claim 1, wherein deactivation and activation of the OLTs comprises the following steps:
- sending a message of the Physical Layer Operations and Maintenance (PLOAM) of the first OLT to the ONTs that a switch over to a new measurement should take place,
- reacting of the ONTs by a new state and an acknowledgement message which activates the second OLT and deactivates the first OLT for a short moment,
- sending a new Standby_Ranging_Time_Bandwith_Map requirement message by the second OLT, wherein the answer to that message is used to measure the round-trip-delay times of the connections to the ONTs and to calculate and store the equalization times,
- deactivating the second OLT and reactivating the first OLT after a predefined time.

4. A redundancy method according to claim 1,
comprising the steps
- transmitting the stored equalization times of the second OLT from the second OLT to the first OLT via a link between them,
- transmitting of these equalization times as standby equalization times into an additional register of each ONT,
- using the standby equalization time of each ONT in a failure case after a switch from the first OLT to the second OLT.

5. A passive optical network with two OLTs and redundant optical lines between the OLTs and at least two splitters designed to execute a method of switching over between the optical lines according to one of the above claims.
